# EUROPÄISCHE PATENTSCHRIFT

(11) **EP 1 473 493 B1**
(45) Veröffentlichungstag und Bekanntmachung des Hinweises auf die Patenterteilung: **19.04.2006**
(21) Anmeldenummer: 04010167.7
(22) Anmeldetag: 29.04.2004
(51) Int. Cl.: F16J 15/20

(54) **Dichtungsanordnung**
Sealing Structure
Garniture d'étanchéité

(30) Priorität: 30.04.2003 DE 10319753
(43) Veröffentlichungstag der Anmeldung: 03.11.2004
(73) Patentinhaber: Carl Freudenberg KG, 69469 Weinheim (DE)
(72) Erfinder: Klenk, Thomas, 69214 Eppelheim (DE); Kessler, Michael, 21217 Seevetal (DE)

(56) Entgegenhaltungen:
- EP-A- 0 695 899
- WO-A-02/090803
- DE-A- 19 911 655
- GB-A- 796 610
- US-A- 4 214 761
- US-A- 4 512 586
- US-A- 5 791 629

## Beschreibung

Die Erfindung betrifft eine Dichtungsanordnung und ein Verfahren zur Herstellung einer Dichtungsanordnung gemäß dem Oberbegriff des Patentanspruch 1.

### Stand der Technik

Aus der DE 199 06 733 C2 und aus der US-A-4 512 586 ist eine Dichtungsanordnung umfassend eine Anzahl ringförmiger und im Axialschnitt V-förmiger Dichtungselemente, allgemein als Dachmanschetten bezeichnet, bekannt. Diese Dichtungsanordnungen werden insbesondere zur Abdichtung axial zueinander bewegter Maschinenelemente eingesetzt. Zur Verstärkung der Dichtwirkung ist die Seite mit dem offenen Profil dem abzudichtenden Medium zugewandt.

Bei der oben genannten Dichtungsanordnung kommen Elastomere wie Polyurethan (PUR), Nitrilkautschuk (NBR) oder Fluorkautschuk (FKM) zum Einsatz.
Nachteilig an elastomeren Werkstoffen ist, dass sie höhere Reibungskoeffizienten als beispielsweise PTFE besitzen. Des weiteren besteht bei den Elastomeren die Neigung zum Setzen und bei höheren Druckverhältnissen die Gefahr der Spaltextrusion. Durch die erhöhte Reibung gibt es einen erhöhten Abrieb und dadurch erhöhten Verschleiß.
PTFE als Werkstoff bietet dagegen höchste chemische Beständigkeit gegen fasst alle abzudichtenden Medien über einen sehr großen Temperaturbereich und einen sehr geringen Reibungskoeffizienten wodurch ein stick-slip vermieden werden kann. Allerdings besitzt PTFE eine hohe Fließneigung wodurch die Gefahr der Spaltextrusion besteht.
Zur Verhinderung der Fließneigung von PTFE ist bekannt, Gewebebahnen mit einer PTFE-Dispersion zu imprägnieren. Die fertige Dachmanschette besteht dann aus mehreren Lagen PTFE-beschichtetem Gewebe. Bei dieser Lösung ist von Nachteil, dass sich das PTFE lediglich als Schicht auf der Oberfläche des Gewebes befindet und das Gewebe nicht vollständig durchdringt. Daraus resultiert ein schichtweiser Aufbau von Gewebe und PTFE was zu unterschiedlichen Reibungsverhältnissen und erhöhtem Verschleiß führt, da das Gewebe ein deutlich schlechteres Reibungsverhalten aufweist als das PTFE.

### Darstellung der Erfindung

Der Erfindung liegt die Aufgabe zugrunde, die vorbekannte Dichtungsanordnung derart weiterzuentwickeln, dass bei sehr guten Reibeigenschaften der Verschleiß und die Gefahr der Spaltextrusion sehr gering ist.
Diese Aufgabe wird erfindungsgemäß mit den Merkmalen von Anspruch 1 gelöst. Auf vorteilhafte Ausgestaltungen nehmen die Unteransprüche Bezug.

Die Lösung der Aufgabe wird bei einer Dichtungsanordnung mit Dachmanschetten der eingangs genannten Art erfindungsgemäß dadurch erreicht, dass die Dachmanschette aus einem PTFE-Vlies besteht.

PTFE besitzt einen niedrigen Reibungskoeffizienten, einen großen Temperatureinsatzbereich und ist gegen die meisten abzudichtenden Medien resistent. Zur Verhinderung der Fließneigung und der Spaltextrusion wird das PTFE in ein Vlies eingelagert. Das Vlies besitzt eine durch Nadeln oder Wasserstrahlverfestigung dreidimensionale, offene und poröse Struktur, die durch die mechanische Bindung auch bei hohen Temperaturen stabil ist. Durch die offene und poröse Struktur kann bei der Imprägnierung mit PTFE ein Gehalt bis zu 99% PTFE erreicht werden. Die offene Struktur ermöglicht eine vollständige Durchdringung des Vliesstoffes wodurch die Schmiereigenschaften von PTFE auch innerhalb der Struktur und nicht nur auf den Oberflächen zu Verfügung stehen.
Eine Spaltextrusion des PTFE wird durch das Verhaken des PTFE in der Matrix des Vliesstoffes verhindert.

In einer ersten Ausgestaltung bestehen die Dachmanschetten aus einem radial umeinander gewickelten PTFE-Vliesstoffband. Bei dieser Anordnung einer zu einem Band zugeschnittenen Vliesstoffbahn wird beim Pressvorgang eine gute innere Verdichtung des Ausgangsmaterials erreicht, bei gleichzeitig gutem Verhaken der imprägnierten Vliesstoffbänder untereinander.

In einer weiteren Ausgestaltung bestehen die Dachmanschetten aus übereinandergelegten PTFE-Vliesstoffscheiben. Durch das Übereinanderlegen können dünne Vliesstoffscheiben verwendet werden, die die vollständige Durchdringung mit PTFE gewährleisten.

In einer weiteren Ausgestaltung besteht die Dachmanschette aus einer schlauchförmig zusammengefügten und zu einem Ring aufgerollten Vliesstoffbahn.

Die Vliesstoffbahnen haben eine Dicke kleiner als 4 mm, vorzugsweise von 0,5 bis 2 mm. Bei diesen Dicken wird bei einer kleinen Verweildauer im Imprägnierbad eine vollständige Durchdringung des Vliesstoffes mit PTFE erreicht.

Bevorzugt entspricht der PTFE Anteil einem Gewichtsgehalt von 50 bis 99% des PTFE-Vlieses, was dem maximalen Sättigungsgrad des Vliesstoffes mit PTFE entspricht.

Bevorzugt beträgt die Faserlänge der Vliesstoff-Fasern 3 bis 100 mm. Fasern mit einer Länge größer 3 mm verhindern wirksam die Fließneigung des PTFE und damit eine Spaltextrusion.

Zweckmäßig beträgt das Flächengewicht des Vliesstoffes vor der PTFE-Imprägnierung 20 bis 800 g/m².

Bevorzugt bestehen die Fasern des Vliesstoffes aus Aramid. Aramidfasem eignen sich insbesondere für einen Einsatz bei hohen Temperaturen.

In einer Ausgestaltung besteht der Vliesstoff aus einer Fasermischung aus zumindest einem der Faserstoffe Glasfasem, Aramidfasem, Polyamidfasern, Polybenzinidazol, Basaltfasern, Kohlefasem, Graphitfasem oder Polyester.

In einer vorteilhaften Ausgestaltung sind die Innenflächen der Dachmanschette in einem Winkel von 45 bis 120°, bevorzugt 60 bis 90° zueinander geneigt. Bei diesen Winkelverhältnisses wird eine größtmögliche Anpressung der Dachmanschette an die abzudichtende Fläche erreicht, da der Mediumdruck die Anpresskraft erhöht.

Zur Herstellung einer Dichtmanschette wird eine Vliesstoffbahn mit PTFE imprägniert und anschließend in einem Durchlaufofen bei 30 bis 300°C getrocknet. Durch die Trocknung in einem Durchlaufofen wird ein Auslaufen der Imprägnierung verhindert. Aus der PTFE getränkten Vliesstoffbahn wird ein Rohling gefertigt und der in einem Presswerkzeug bei einem Druck von 5 bis 100 MPa zu einer V-förmigen Dachmanschette gepresst wird. Dieser Pressdruck führt zu einer guten inneren Verdichtung des Materials bei einem guten Zusammenhalt der Vliesstoffbahnen. In einer anschließenden Sinterbehandlung bei einer Temperatur von 340 bis 390°C in einer Dauer von 10 bis 60 min wird die Dachmanschette fertig gestellt. Durch das Sintern wird die Dachmanschette verfestigt und die Spaltextrusionsneigung wird nochmals verringert.

In einer Ausgestaltung wird der Rohling durch radiales zumindest zweilagiges umeinanderwickeln eines Bandes aus PTFE-Vlies hergestellt.

In einer weiteren Ausgestaltung wird der Rohling durch Übereinanderschichten von aus dem PTFE-Vlies ausgestanzter, ringförmiger Scheiben hergestellt.

In einer anderen Ausgestaltung wird der Rohling durch Aufrollen einer zu einem Schlauch zusammengehefteten PTFE-getränkten Vliesstoffbahn zu einem Ring hergestellt.

### Kurzbeschreibung der Zeichnungen

Ein Ausführungsbeispiel der erfindungsgemäßen Dichtungsanordnung wird nachfolgend anhand der Figuren 1 bis 6 näher erläutert. Diese zeigen, jeweils in schematischer Darstellung:
Fig. 1 einen aus einem Vliesstoffband radial umeinander gewickelten Rohling einer Dachmanschette in der Draufsicht
Fig. 2 einen aus Vliesstoffscheiben geschichteten Rohling im Querschnitt
Fig. 3 einen aus einem Vliesstoffschlauch gerollten Rohling im Querschnitt
Fig. 4 die Verpresseinrichtung mit eingelegtem Rohling im Schnitt
Fig. 5 eine Dachmanschette im Querschnitt

### Ausführung der Erfindung

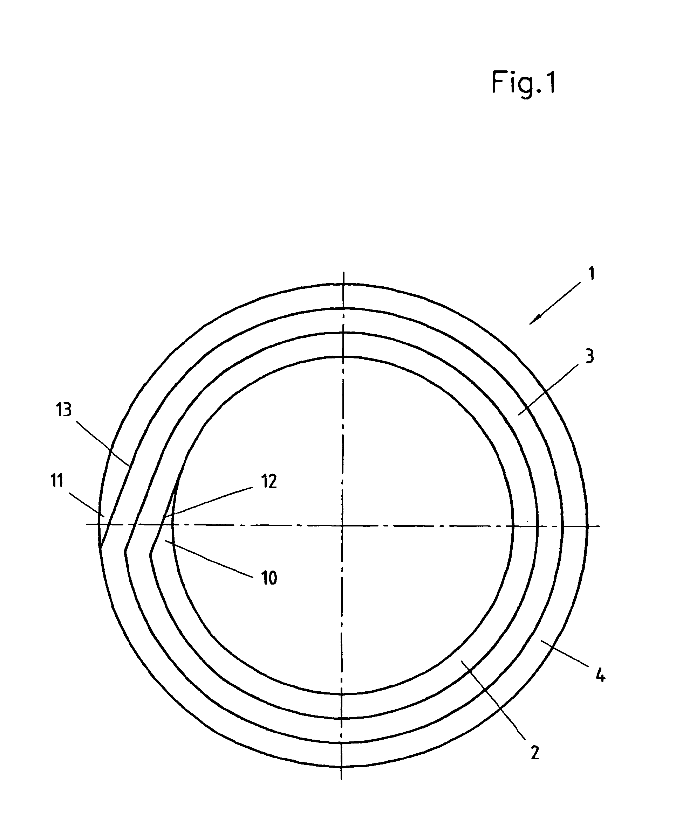

In der Fig. 1 ist der später als Dachmanschette dienende Rohling 1 in der Draufsicht dargestellt. Der Rohling 1 besteht aus drei radial umeinander gewickelten Lagen 2, 3 und 4 aus einem mit einem mit PTFE getränkten Vliesstoffband. Der Wickelanfang 10 der ersten Lage 2 und das Wickelende 11 der letzten Lage 4 des Vliesstoffbandes liegen mit ihren Schnittkanten 12 und 13 übereinander. Die Schnittkanten 12 und 13 sind mit auslaufenden Schrägen versehen.

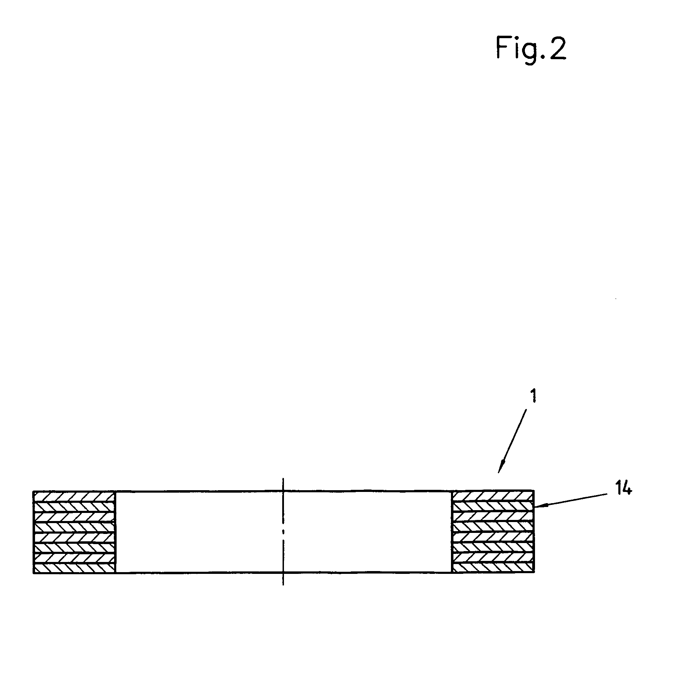

Fig. 2 zeigt einen Rohling 1 im Querschnitt dargestellt. Der Rohling 1 besteht aus einer Anzahl, in dieser Ausführung acht, übereinander geschichteter Scheiben 14 die aus einer mit PTFE getränkten Vliesstoffbahn ausgestanzt werden.

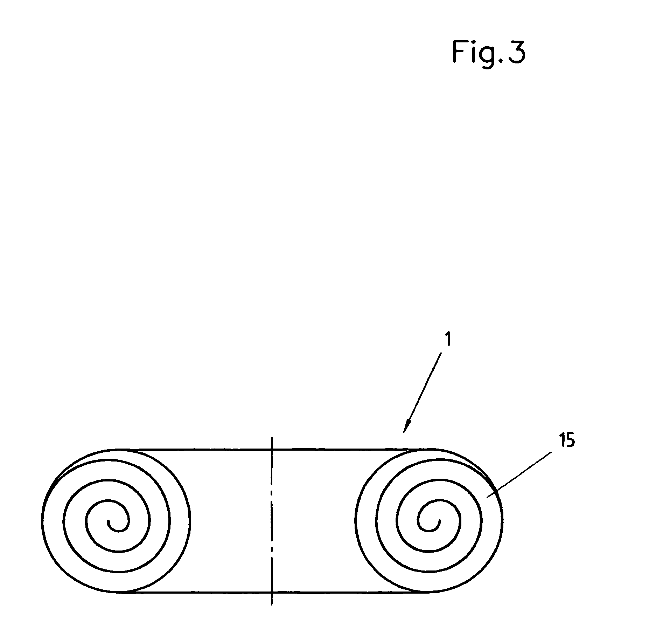

Fig. 3 zeigt einen Rohling 1 im Querschnitt dargestellt. In dieser Ausführung besteht der Rohling 1 aus einer Vliesstoffbahn 15 die schlauchförmig zusammengeheftet und auf einem Dom zu einem, im Querschnitt, spiralförmigen Rohling 1 aufgerollt wird.

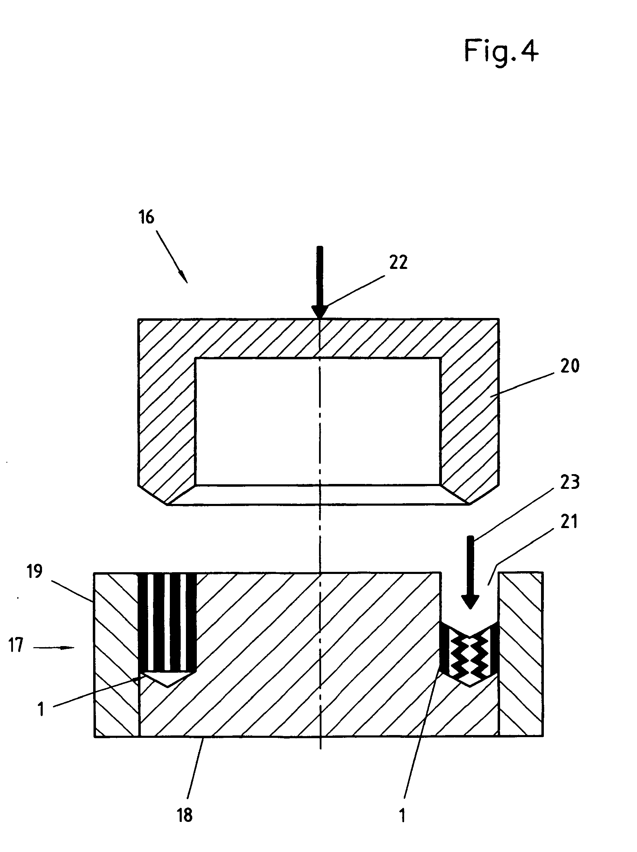

Die Fig. 4 zeigt die Presseinrichtung 16, in der der imprägnierte, vorbereitete Rohling 1 verpresst wird. Die Presseinrichtung 16 besteht aus der Matrize 17 mit dem Kern 18 und dem Mantel 19 sowie dem Stempel 20. In den Raum 21, zwischen dem Kern 18 und dem Mantel 19, wird im vorliegenden Fall ein nach Figur 1 radial gewickelter Rohling 1 eingefügt, wie auf der linken Seite der Fig. eingezeichnet. Danach wird der Stempel 20, wie mit den Pfeilen 22 und 23 angedeutet, axial in die Öffnung 21 hineindrückt. Dies hat ein Zusammendrücken des Rohlings 1 zur Folge, wie auf der rechten Seite der Fig. gezeigt. Durch diesen Pressvorgang bekommt der Rohling 1 die charakteristische V-Form. Nach dem Verpressvorgang wird der Rohling 1 der Presseinrichtung 17 entnommen und in einer anschließenden Wärmebehandlung fertig gestellt.

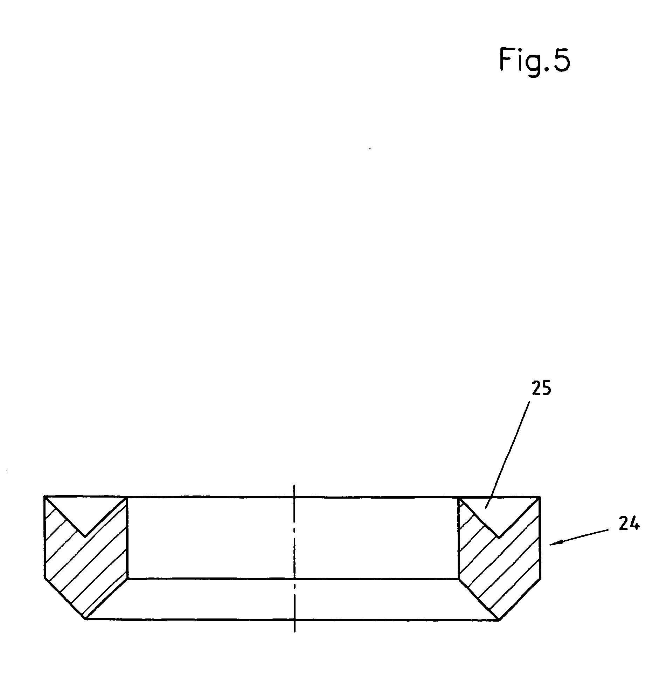

Die Fig. 5 zeigt die fertig gestellte Dachmanschette 24 in dem die Innenflächen 25 mit einem Winkel von 90° zueinander geneigt sind.

## Patentansprüche

1. Dachmanschette mit V-förmigem Querschnitt, **dadurch gekennzeichnet, dass** die Dachmanschette (24) aus einem bei einer Temperatur von 340 bis 390°C und einer Dauer von 10 bis 60 min gesinterten PTFE-Vlies besteht.

2. Dachmanschette nach Anspruch 1, **dadurch gekennzeichnet, dass** die Dachmanschette (24) aus einem radial umeinander gewickelten PTFE-Vliesstoffband besteht.

3. Dachmanschette nach Anspruch 1, **dadurch gekennzeichnet, dass** die Dachmanschette (24) aus übereinandergelegten PTFE-Vliesstoffscheiben besteht.

4. Dachmanschette nach Anspruch 1, **dadurch gekennzeichnet, dass** die Dachmanschette (24) aus einer schlauchförmig zusammengefügten und zu einem Ring aufgerollten Vliesstoffbahn besteht.

5. Dachmanschette nach einem der Ansprüche 1 bis 4, **dadurch gekennzeichnet, dass** das PTFE-Vlies eine Dicke kleiner 4 mm aufweist.

6. Dachmanschette nach einem der Ansprüche 1 bis 5, **dadurch gekennzeichnet, dass** der Vliesstoff ein Dicke von 0,5 bis 2 mm aufweist.

7. Dachmanschette nach einem der Ansprüche 1 bis 6, **dadurch gekennzeichnet, dass** der PTFE-Anteil einem Gewichtsgehalt von 50 bis 99% des PTFE-Vlieses entspricht.

8. Dachmanschette nach einem der Ansprüche 1 bis 7, **dadurch gekennzeichnet, dass** die Faserlänge der Vliesstoff-Fasern 3 bis 100 mm beträgt.

9. Dachmanschette nach einem der Ansprüche 1 bis 8, **dadurch gekennzeichnet, dass** das Flächengewicht des Vliesstoffes vor der PTFE-Imprägnierung 20 bis 800 g/m² beträgt.

10. Dachmanschette nach einem der Ansprüche 1 bis 9, **dadurch gekennzeichnet, dass** die Fasern des Vliesstoffes aus Aramid bestehen.

11. Dachmanschette nach einem der Ansprüche 1 bis 9, **dadurch gekennzeichnet, dass** der Vliesstoff aus einer Fasermischungen aus zumindest einem der Faserstoffe Glasfasern, Aramidfasern, Polyamidfasern, Polybenzinidazol, Basaltfasern, Kohlefasern, Graphitfasern oder Polyester besteht.

12. Dachmanschette nach einem der Ansprüche 1 bis 11, **dadurch gekennzeichnet, dass** die Dachmanschette (24) Innenflächen (25) aufweist, die in einem Winkel von 45 bis 120° zueinander geneigt sind.

13. Dachmanschette nach einem der Ansprüche 1 bis 12, **dadurch gekennzeichnet, dass** die Innenflächen (25) der Dachmanschette (24) in einem Winkel von 60 bis 90° zueinander geneigt sind.

## Claims

1. A chevron packing collar having a V-shaped cross section, **characterized in that** the chevron packing collar (24) consists of a PTFE nonwoven sintered at a temperature in the range from 340 to 390°C for a period in the range from 10 to 60 min.

2. A chevron packing collar according to claim 1, **characterized in that** the chevron packing collar (24) consists of a radially self-wound PTFE nonwoven tape.

3. A chevron packing collar according to claim 1, **characterized in that** the chevron packing collar (24) consists of mutually superposed PTFE nonwoven discs.

4. A chevron packing collar according to claim 1, **characterized in that** the chevron packing collar (24) consists of a nonwoven web joined together in tube form and rolled up to form a ring.

5. A chevron packing collar according to any one of claims 1 to 4, **characterized in that** the PTFE nonwoven is less than 4 mm thick.

6. A chevron packing collar according to any one of claims 1 to 5, **characterized in that** the nonwoven fabric is from 0.5 to 2 mm thick.

7. A chevron packing collar according to any one of claims 1 to 6, **characterized in that** PTFE comprises from 50% to 99% by weight of the PTFE nonwoven.

8. A chevron packing collar according to any one of claims 1 to 7, **characterized in that** the length of the nonwoven fabric fibres is in the range from 3 to 100 mm.

9. A chevron packing collar according to any one of claims 1 to 8, **characterized in that** the basis weight of the nonwoven fabric before PTFE impregnation is in the range from 20 to 800 g/m².

10. A chevron packing collar according to any one of claims 1 to 9, **characterized in that** the fibres of the nonwoven fabric consist of aramid.

11. A chevron packing collar according to any one of claims 1 to 9, **characterized in that** the nonwoven fabric consists of fibre blends of at least one of glass fibres, aramid fibres, polyamide fibres, polybenzimidazole, basalt fibres, carbon fibres, graphite fibres and polyester.

12. A chevron packing collar according to any one of claims 1 to 11, **characterized in that** the chevron packing collar (24) has inner surfaces (25) inclined relative to each other at an angle in the range from 45 to 120°.

13. A chevron packing collar according to any one of claims 1 to 12, **characterized in that** the inner surfaces (25) of the chevron packing collar (24) are inclined relative to each other at an angle in the range from 60 to 90°.

## Revendications

1. Garniture d'étanchéité pour toiture à section transversale en V, **caractérisée en ce que** la garniture d'êtanchéité pour toiture (24) est constituée d'un feutre au PTFE fritté à une température de 340 à 390°C pendant une durée de 10 à 60 min.

2. Garniture d'étanchéité pour toiture selon la revendication 1, **caractérisée en ce que** la garniture d'étanchéité pour toiture (24) est constituée d'une bande de feutre au PTFE enroulée radialement sur elle-même.

3. Garniture d'étanchéitê pour toiture selon la revendication 1, **caractérisée en ce que** la garniture d'étanchéité pour toiture (24) est constituée de plaques de feutre au PTFE superposées.

4. Garniture d'étanchéitê pour toiture selon la revendication 1, **caractérisée en ce que** la garniture d'étanchéité pour toiture (24) est constituée d'une bande de feutre assemblée en tube et enroulée en anneau.

5. Garniture d'étanchéité pour toiture selon l'une des revendications 1 à 4, **caractérisée en ce que** le feutre au PTFE a une épaisseur inférieure à 4 mm.

6. Garniture d'étanchéité pour toiture selon l'une des revendications 1 à 5, **caractérisée en ce que** le feutre a une épaisseur de 0,5 à 2 mm.

7. Garniture d'étanchéité pour toiture selon l'une des revendications 1 à 6, **caractérisée en ce que** la proportion de PTFE dans le feutre au PTFE représente une teneur en poids de 50 à 99 %.

8. Garniture d'étanchéité pour toiture selon l'une des revendications 1 à 7, **caractérisée en ce que** la longueur des fibres du feutre est de 3 à 100 mm.

9. Garniture d'étanchéité pour toiture selon l'une des revendications 1 à 8, **caractérisée en ce que** le poids du feutre par unité de surface avant son imprégnation par le PTFE est de 20 à 800 g/m².

10. Garniture d'étanchéité pour toiture selon l'une des revendications 1 à 9, **caractérisée en ce que** les fibres du feutre sont en aramide.

11. Garniture d'étanchéité pour toiture selon l'une des revendications 1 à 9, **caractérisée en ce que** le feutre est constitué d'un mélange de fibres en au moins un des matériaux fibreux que sont les fibres de verre, les fibres d'aramide, les fibres de polyamide, le polybenzimidazole, les fibres de basalte, les fibres de carbone, les fibres de graphite ou le polyester.

12. Garniture d'étanchéité pour toiture selon l'une des revendications 1 à 11, **caractérisée en ce que** les surfaces intérieures (25) de la garniture d'étanchéité pour toiture (24) sont inclinées l'une par rapport à l'autre d'un angle de 45 à 120°.

13. Garniture d'étanchéité pour toiture selon l'une des revendications 1 à 12, **caractérisée en ce que** les surfaces intérieures (25) de la garniture d'étanchéité pour toiture (24) sont inclinées l'une par rapport à l'autre d'un angle de 60 à 90°.
